# EUROPÄISCHE PATENTSCHRIFT

(11) **EP 3 009 409 B1**
(45) Veröffentlichungstag und Bekanntmachung des Hinweises auf die Patenterteilung: **05.01.2022**
(21) Anmeldenummer: 15002685.4
(22) Anmeldetag: 16.09.2015
(51) Int. Cl.: C03B 7/10

(54) **VERFAHREN ZUM BETRIEB EINER TROPFENSCHERE FÜR EINE FEEDERVORRICHTUNG EINER GLASMASCHINE**
METHOD OF USING DROPLET SHEARS FOR A FEEDER DEVICE OF A GLASS MACHINE
PROCÉDÉ D'UTILISATION DE CISEAUX DE DÉCOUPE DE PARAISONS POUR UN DISPOSITIF D'ALIMENTATION D'UNE MACHINE DE MOULAGE DE VERRE

(30) Priorität: 17.10.2014 DE 102014015329
(43) Veröffentlichungstag der Anmeldung: 20.04.2016
(73) Patentinhaber: Rolf Themann & Partner SA, 1273 Luxembourg (LU)
(72) Erfinder: Rosenstein, Stephan, 40477 Düsseldorf (DE); Rodriguez, Antonio Martin, 47119 Duisburg (DE); Ruskowski, Klaus, 45894 Gelsenkirchen (DE); Broll, Andre, 46238 Bottrop (DE)
(74) Vertreter: Lelgemann, Karl-Heinz

(56) Entgegenhaltungen:
- EP-A1- 0 903 326
- EP-A2- 0 712 812
- CN-Y- 2 546 445
- DE-A1- 3 401 011
- DE-U1-202008 017 806
- US-A- 3 579 319
- US-A- 4 230 010

## Beschreibung

Die Erfindung bezieht sich auf ein Verfahren zum Betrieb einer Tropfenschere nach dem Oberbegriff des Patentanspruchs 1.

Mittels derartig betriebener Tropfenscheren sind Glastropfen von einem Glasstrang abschneidbar. Eine derartige Tropfenschere ist üblicherweise in die Feedervorrichtung der Glasmaschine integriert und am Auslaß einer Schüssel der Feedervorrichtung angeordnet. Aus der Schüssel der Feedervorrichtung läuft der Glasstrang, der mittels der Tropfenschere in Glastropfen aufgeschnitten wird.

Für das Schneiden der Glastropfen hat die Tropfenschere zwei innerhalb einer Ebene zueinander bewegliche Scherenblätter. Diese Scherenblätter werden üblicherweise in mechanischer Kopplung zueinander aufeinander zu und voneinander weg bewegt. Durch die Aufeinanderzubewegung der Scherenblätter geschnittene Glastropfen müssen unterhalb der Schnittebene der Tropfenschere mittels einer Tropfenführung an nachgeschaltete Abschnitte der Feedervorrichtung der Glasmaschine übergeben bzw. durch eine derartige Tropfenführung zu diesen nachgeschalteten Abschnitten hin geführt werden.

Aus der DE 3 401 011 A1 ist eine Glas- bzw. Tropfenschere bekannt, die einer Feedervorrichtung einer Glasmaschine zugeordnet ist. Beim Betrieb dieser Glas- bzw. Tropfenschere werden zumindest zwei Scherenblätter innerhalb einer Ebene voneinander weg und aufeinander zu bewegt, um von einem Glasstrang in geregelter Weise einen Glastropfen abzutrennen. Zur Durchführung der Aufeinanderzu- und der Voneinanderwegbewegung der beiden Scherenblätter ist jedem dieser beiden Scherenblätter eine Servo-Linear-Antriebseinheit zugeordnet. Jede der beiden Servo-Linear-Antriebseinheiten kann separat angesteuert werden.

Aus der EP 0 712 812 A2 ist eine Tropfenschere bekannt, die zur Feedervorrichtung einer Glasmaschine gehört. Die Tropfenschere hat zwei innerhalb einer Ebene voneinander weg und aufeinander zu bewegbare Scherenblätter. Jedes Scherenblatt ist an eine ihm zugeordnete Linear-Antriebseinheit angeschlossen. Mittels der beiden Linear-Antriebseinheiten werden die Scherenblätter auf das jeweils andere Scherenblatt zu und von diesem weg bewegt. Jede Linear-Antriebseinheit ist separat ansteuerbar.

Die EP 0 903 326 A1 zeigt eine Tropfenschere, bei der durch eine bestimmte Ausgestaltung des Antriebs sichergestellt werden soll, dass die Bewegung der aufeinander zu und voneinander weg bewegbaren Scherenblätter möglichst symmetrisch erfolgt, wobei sich diese Symmetrie auf eine Ebene bezieht, in der die Glastropfen fallen. Hierdurch soll eine möglichst synchrone Bewegung der Scherenblätter, die ein Scherenblattpaar bilden, sichergestellt werden.

Im Falle der Tropfenschere, wie sie aus der CN 2 546 445 Y gezeigt ist, ist für die beide Scherenblätter eines Scherblattpaars aufweisende Tropfenschere lediglich eine einzige Antriebseinheit vorgesehen.

Ausgehend von dem vorstehend geschilderten Stand der Technik liegt der Erfindung die Aufgabe zugrunde, das Verfahren zum Betrieb einer Tropfenschere derart weiterzubilden, dass der die Tropfenschere aufweisende Bereich der Glasmaschine einfacher ausgestaltet werden kann und dass die Qualität der geschnittenen Glastropfen erhöht werden kann.

Diese Aufgabe wird erfindungsgemäß dadurch gelöst, dass jede Servo-Linear-Antriebseinheit durch Auswahl des Punktes bzw. der Linie, in der die beiden Scherenblätter innerhalb ihrer Schnittebene aufeinander treffen, und durch unterschiedliche Geschwindigkeits- bzw. Beschleunigungsprofile für die beiden Scherenblätter das ihr zugeordnete Scherenblatt so steuert, dass ein vom Glasstrang abgetrennter Glastropfen ohne irgendwelche Bauteile zur Tropfenführung nachgeschalteten Vorrichtungsteilen der Feedervorrichtung zugeleitet wird.

Vorteilhaft kann für jede Servo-Linear-Antriebseinheit in einer Steuervorrichtung ein unterschiedliches Bewegungsprofil abgespeichert werden.

Entsprechend kann jede Servo-Linear-Antriebseinheit mit unterschiedlicher Geschwindigkeit und unterschiedlicher Beschleunigung gefahren werden. Entsprechend kann der Punkt bzw. die Linie, in der die beiden Scherenblätter innerhalb der Schnittebene aufeinander treffen und den Schneidvorgang des Glastropfens beenden, innerhalb der Schnittebene quasi beliebig gewählt werden.

Der Schneidvorgang kann daher so gesteuert werden, wozu unterschiedliche Geschwindigkeits- und Bewegungsprofile der beiden Scherenblätter beitragen können, dass auf irgendwelche Bauteile zur Tropfenführung, d.h. Bauteile, mittels denen die Glastropfen zu nachgeschalteten Vorrichtungsteilen geführt werden, verzichtet werden kann; entsprechende beim Stand der Technik vorgesehene, der Tropfenführung dienende Bauteile sind nicht erforderlich.

Durch die im Falle des erfindungsgemäßen Verfahrens mögliche exakte Lokalisierung des Aufeinandertreffens der beiden Scherenblätter sowie die erfindungsgemäß mögliche Vorgabe unterschiedlicher Bewegungsprofile für die beiden Scherenblätter kann der Schneidvorgang so gesteuert werden, dass die vom Glasstrang abgetrennten Glastropfen ohne jedwede Führungsmittel nachgeschalteten Vorrichtungsteilen zugeführt werden.

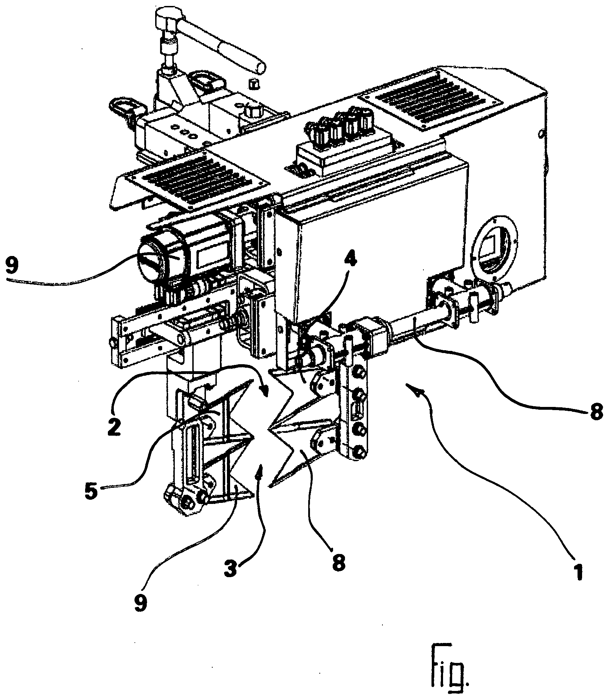

Im Folgenden wird die Erfindung anhand einer Ausführungsform unter Bezugnahme auf die Zeichnung näher erläutert, deren einzige Figur ein Ausführungsbeispiel einer in einem erfindungsgemäßen Verfahren einsetzbaren Tropfenschere zeigt.

Eine in der einzigen Figur gezeigte Tropfenschere 1 kommt als Bestandteil einer im übrigen in der Figur nicht gezeigten Feedervorrichtung einer Glasmaschine zum Einsatz. Die Tropfenschere 1 ist an einem Auslaß einer Schüssel der Feedervorrichtung angeordnet. Mittels der Tropfenschere 1 ist ein aus dieser Schüssel der Feedervorrichtung austretender schmelzflüssiger Glasstrang in Glastropfen vorgebbaren Volumens aufteilbar.

Im dargestellten Ausführungsbeispiel weist die Tropfenschere 1 ein erstes Scherenblattpaar 2 und ein zweites Scherenblattpaar 3 auf. Mittels der beiden Scherenblattpaare 2, 3 können zwei Glasstränge mehr oder weniger simultan bzw. gleichzeitig in Glastropfen vorgebbaren Volumens aufgeteilt werden.

Das erste Scherenblattpaar 2 hat zwei Scherenblätter 4, 5, die innerhalb einer Ebene aufeinander zu und voneinander weg bewegbar sind. Wenn die beiden Scherenblätter 4, 5 aufeinander zu bewegt werden, durchtrennen sie den in der Figur nicht gezeigten Glasstrang.

Jedem der beiden Scherenblätter 4, 5 des ersten Scherenblattpaars 2 ist eine separate Servo-Linear-Antriebseinheit 6 bzw. 7 zugeordnet, wobei jede dieser beiden Servo-Linear-Antriebseinheiten 6, 7 separat ansteuerbar ist. Entsprechend kann jede der beiden Servo-Linear-Antriebseinheiten 6, 7 und hierdurch jedes Scherenblatt 4, 5 des ersten Scherenblattpaars 2 entsprechend einem unterschiedlichen Bewegungsprofil betrieben werden. So kann beispielsweise jede Servo-Linear-Antriebseinheit 6 bzw. 7 mit unterschiedlicher Geschwindigkeit und unterschiedlicher Beschleunigung betrieben werden, wobei sich entsprechende Bewegungsprofile des Scherenblatts 4 bzw. des Scherenblatts 5 ergeben.

Hierdurch entsteht die Möglichkeit, dass der Punkt bzw. diejenige Linie, in der die beiden Scherenblätter 4, 5 innerhalb der Schnittebene des ersten Scherenblattpaars 2 aufeinandertreffen und den Schneidvorgang zur Herstellung des Glastropfens aus dem Glasstrang beenden, innerhalb der Schnittebene des ersten Scherenblattpaars 2 quasi beliebig gewählt werden kann. Entsprechend kann dieser Schneidvorgang durch unterschiedliche Geschwindigkeits- bzw. Beschleunigungsprofile für die beiden Scherenblätter 4, 5 des ersten Scherenblattpaars 2 so gesteuert werden, dass irgendwelche Bauteile zur Tropfenführung, d.h. Bauteile, mittels denen der vom Glasstrang abgetrennte Glastropfen zu nachgeschalteten Vorrichtungsteilen der Feedervorrichtung geleitet wird, entfallen können. Allein durch die Art und Weise der Durchführung des Schneidvorgangs kann der Glastropfen nachgeschalteten Vorrichtungsteilen zugeleitet werden.

In entsprechender Weise sind die beiden Scherenblätter 8, 9 des zweiten Scherenblattpaars 3 steuer- bzw. regelbar.

Aufgrund der exakten Lokalisierung des Aufeinandertreffens der beiden Scherenblätter 4, 5 bzw. 8, 9 der beiden Scherenblattpaare 2, 3 in der Schneidebene des jeweiligen Scherenblattpaars 2 bzw. 3 ist es möglich, den Schneidvorgang, mittels dem der jeweilige Glastropfen vom jeweiligen Glasstrang abgetrennt wird, so zu steuern, dass als Führungsmittel fungierende zusätzliche Bauteile nicht mehr vonnöten sind.

## Patentansprüche

1. Verfahren zum Betrieb einer Tropfenschere (1) für eine Feedervorrichtung einer Glasmaschine, bei dem zumindest zwei Scherenblätter (4, 5) der Tropfenschere (1) innerhalb einer Ebene voneinander weg und aufeinander zu bewegt werden, wobei jedes Scherenblatt (4, 5) mittels einer ihm zugeordneten Servo-Linear-Antriebseinheit (6, 7) auf das jeweils andere Scherenblatt (5, 4) zu und von diesem weg bewegt und wobei jede Servo-Linear-Antriebseinheit (6, 7) separat angesteuert wird, **dadurch gekennzeichnet, dass** jede Servo-Linear-Antriebseinheit (6, 7) durch Auswahl des Punktes bzw. der Linie, in der die beiden Scherenblätter (4, 5) innerhalb ihrer Schnittebene aufeinandertreffen, und durch unterschiedliche Geschwindigkeits- bzw. Beschleunigungsprofile für die beiden Scherenblätter (4, 5) das ihr zugeordnete Scherenblatt (4, 5) so steuert, dass ein vom Glasstrang abgetrennter Glastropfen ohne irgendwelche Bauteile zur Tropfenführung nachgeschalteten Vorrichtungsteilen der Feedervorrichtung zugeleitet wird.

2. Verfahren nach Anspruch 1, bei dem in einer Steuervorrichtung für jede Servo-Linear-Antriebseinheit (6, 7) und damit für jedes Scherenblatt (4, 5) ein unterschiedliches Bewegungsprofil abgespeichert wird.

3. Verfahren nach Anspruch 1 oder 2, bei der jede Servo-Linear-Antriebseinheit (6, 7) mit einer unterschiedlichen Geschwindigkeit und unterschiedlichen Beschleunigung angesteuert wird.

## Claims

1. Method for operating a drop shears (1) for a feed device of a glass machine, in which at least two scissor blades (4, 5) of the drop shears (1) are movable toward and away from one another within a plane, wherein each scissor blade (4, 5) is moved on the respective other scissor blade (5, 4) toward and away from the same by means of a servo-linear drive unit (6, 7) assigned thereto, and wherein servo-linear drive unit (6, 7) is separately driven, **characterized in that** each servo-linear drive unit (6, 7) controls the scissor blade (4, 5) assigned to it by selecting the point or the line at which the two scissor blades (4, 5) meet one another within their cutting plane and by different speed or acceleration profiles for the two scissor blades (4, 5), such that a glass drop, separated from the glass strand, is supplied to downstream device parts of the feed device without any components for drop guiding.

2. Method according to claim 1, in which a different movement profile is stored in a control device for each servo-linear drive unit (6, 7) and thus for each scissor blade (4, 5).

3. Method according to claim 1 or 2, in which each servo-linear drive unit (6, 7) is driven at a different speed and a different acceleration.

## Revendications

1. Procédé destiné à faire fonctionner des ciseaux à gouttes (1) pour un dispositif de distribution d'une machine de moulage de verre, pour lequel au moins deux lames (4, 5) de ciseaux à gouttes (1) sont rapprochées et éloignées l'une de l'autre à l'intérieur d'un plan, sachant que chaque lame de ciseaux (4, 5) est déplacée sur l'autre lame de ciseaux (5, 4) rapprochée et éloignée respectivement de celle-ci au moyen d'un servomoteur linéaire (6, 7) qui lui est attribuée et sachant que chaque servomoteur linéaire (6, 7) est piloté séparément, **caractérisé en ce que** chaque servomoteur linéaire (6, 7) commande la lame de ciseaux (4, 5) qui lui est attribué par sélection du point ou de la ligne dans laquelle les deux lames de ciseaux (4, 5) se rencontrent à l'intérieur de leur plan de coupe et par des profils de vitesse ou d'accélération différents pour les deux lames de ciseaux (4, 5) de telle manière qu'une goutte de verre séparée d'un fil de verre est acheminée à des parties de dispositif montées en aval du dispositif de distribution sans composants quelconques pour le guidage des gouttes.

2. Procédé selon la revendication 1, pour lequel un profil de déplacement différent est mémorisé dans un dispositif de commande pour chaque servomoteur linéaire (6, 7) et de ce fait pour chaque lame de ciseaux (4, 5) .

3. Procédé selon la revendication 1 ou 2, pour lequel chaque servomoteur linéaire (6, 7) est pilotée avec une vitesse différente et une accélération différente.
